(19) Europäisches Patentamt
European Patent Office
Office européen des brevets

(11) **EP 3 632 756 A1**

(12) **EUROPÄISCHE PATENTANMELDUNG**

(43) Veröffentlichungstag:
**08.04.2020 Patentblatt 2020/15**

(51) Int Cl.:
**B60T 8/17** (2006.01)          **B60T 8/32** (2006.01)
**B62L 3/02** (2006.01)

(21) Anmeldenummer: **19197328.8**

(22) Anmeldetag: **13.09.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.10.2018 DE 102018216975**

(71) Anmelder: **Robert Bosch GmbH
70442 Stuttgart (DE)**

(72) Erfinder: **Moia, Alessandro
71088 Holzgerlingen (DE)**

(54) **BREMSHEBELVORRICHTUNG**

(57) Die vorliegende Erfindung betrifft eine Bremshebelvorrichtung (1) eines Zweirads (2), aufweisend einen Bremshebel (4), der an einem Lager (8) drehbar gelagert und an einem Kontaktpunkt (9) mit einem Kolben (5) eines Fluidzylinders (6) gekoppelt ist, wobei eine Druckkammer (7) des Fluidzylinders (6) direkt mit einer Bremsleitung (3) verbunden ist, und wobei ein Hebelabstand (L2) zwischen Lager (8) und Kontaktpunkt (9) durch einen Aktuator (10) veränderlich ist.

**Fig. 2**

EP 3 632 756 A1

**Beschreibung**

Stand der Technik

Die vorliegende Erfindung betrifft eine Bremshebelvorrichtung eines Zweirads. Bei dem Zweirad handelt es sich insbesondere um ein Fahrrad. Außerdem betrifft die Erfindung eine Zweirad, umfassend eine solche Bremshebelvorrichtung. Mit der Bremshebelvorrichtung ist vorteilhafterweise eine Bremsanlage des Zweirads betätigbar. Schließlich betrifft die Erfindung außerdem ein Verfahren zum Ansteuern einer Bremshebelvorrichtung. Insbesondere weist die Bremshebelvorrichtung eine mechanische Übersetzung auf.

Aus dem Stand der Technik sind Lösungen bekannt, die eine Verhinderung eines Blockierens eines Rades während des Bremsvorganges von Fahrrädern umsetzen. Bekannte Lösungen generieren über einen Aktuator eine Kraft, die gegen die Handkraft des Fahrers wirkt. Bspw. wird eine derartige Funktionalität in den Anmeldungen DE 41 31 864 A1, FR 2 738 207 A1, FR 2 738 204 A1 und WO 2014/166336 A1 durch einen Elektromotor umgesetzt, der direkt an dem Bremshebel eine Gegenkraft zu der Handkraft des Fahrers generiert, wodurch das gesamte Bremsmoment moduliert wird. In den Anmeldungen US 4,315, 659 A, US 4, 456, 310 A und US 4, 494, 800, A wird ein ähnliches Prinzip realisiert. In diesem Fall wird die Gegenkraft anstatt durch einen Elektromotor durch hydraulische Komponenten umgesetzt.

Die in dem Bremshebel integrierten Systeme, die im Stand der Technik präsentiert werden, benötigen Elektromotoren oder hydraulische Komponenten, die in der Lage sind, hohe Kräfte zu generieren. Insbesondere müssen diese Kräfte direkt gegen die Handkraft des Fahrers wirken, die bis zu 300 Newton oder 400 Newton betragen kann. Darüber hinaus muss die generierte Kraft mit hoher Dynamik zur Verfügung gestellt werden, da der Bremsmoment-Abbau innerhalb kürzester Zeit geschehen muss, um wirksam ein Blockieren des gebremsten Rades zu verhindern. Dies hat zur Folge, dass hohe Leistungsaufnahmen notwendig sind.

Offenbarung der Erfindung

Die erfindungsgemäße Bremshebelvorrichtung erlaubt ein sicheres und zuverlässiges Vermeiden eines Blockierens eines gebremsten Rades eines Zweirades. Dabei ist insbesondere eine Leistungsaufnahme reduziert. Insbesondere wird dies durch den Einsatz einer variablen mechanischen Übersetzung zwischen einem Bremshebel und einer Bremsleitung erreicht, sodass in der Bremsleitung gespeicherte Energie ausgenutzt werden kann. Anhand dieser gespeicherten Energie lassen sich Modulationen des Bremsdrucks generieren, wodurch ein Bremsdruck einstellbar ist, sodass ein Stillstand und damit Blockieren des gebremsten Rades vermieden ist. Insbesondere lassen sich eine Vielzahl von Bremsdruck-Reduktionszyklen durchführen, wobei hierfür nur ein geringer Energiebedarf besteht.

Die Bremshebelvorrichtung eines Zweirades weist einen Bremshebel auf. Der Bremshebel ist insbesondere durch einen Benutzer bedienbar, indem der Benutzer mit seiner Hand an dem Bremshebel zieht. Der Bremshebel ist an einem Lager drehbar gelagert und an einem Kontaktpunkt mit einem Kolben eines Fluidzylinders gekoppelt. Übt ein Benutzer eine Kraft auf den Bremshebel aus, so ist aufgrund des Lagers der Bremshebel um besagtes Lager rotierbar, wodurch eine Kraft auf den Kolben resultiert. Der Fluidzylinder wiederum weist eine Druckkammer auf, wobei die Druckkammer direkt mit einer Bremsleitung verbunden ist. Über die Bremsleitung ist die Bremshebelvorrichtung mit einer Bremsvorrichtung koppelbar. Somit wird durch Bewegen des Fluidzylinders ein Bremsdruck innerhalb der Bremsleitung erhöht, wodurch eine Gegenkraft auf den Fluidzylinder wirkt. Es stellt sich an dem Bremshebel somit ein Gleichgewicht ein, da einerseits eine Kraft eines Benutzers, andererseits eine Gegenkraft des Bremssystems wirken.

Um ein Blockieren eines gebremsten Rades zu vermeiden, ist vorgesehen, dass ein Hebelabstand zwischen Lager und Kontaktpunkt durch einen Aktuator veränderlich ist. Durch die Veränderung des Hebelabstandes ändert sich somit ein Hebelweg zwischen der durch den Fluidzylinder generierten Rückstellkraft und dem Lager. Dadurch ist insbesondere erreichbar, dass ein durch die Gegenkraft auf den Bremshebel wirkendes Drehmoment größer ist als ein Drehmoment, das aufgrund der Kraft, mit der ein Benutzer an dem Bremshebel zieht, auf den Bremshebel wirkt. Somit wird der Bremshebel gegen die Kraft des Benutzers rückgestellt, wobei gleichzeitig der Aktuator nicht gegen die Kraft des Benutzers arbeiten muss. Somit kann der Aktuator sehr energiesparend arbeiten, während gleichzeitig Energie aus der Bremsleitung durch Verschieben der aktuellen Gleichgewichtsposition des Bremshebels in eine Bewegung des Bremshebels gewandelt werden kann. Diese Energie kann zumindest teilweise durch Rückveränderung des Hebelabstandes zurückgewonnen werden, wodurch insbesondere Druckverluste aufgrund einer Regelung zum Vermeiden eines Blockierens des gebremsten Rades minimiert sind.

Die Unteransprüche haben bevorzugte Weiterbildungen der Erfindung zum Inhalt.

Vorteilhafterweise ist vorgesehen, dass das Lager an einer Verstellmechanik angebracht ist. Die Verstellmechanik ist durch den Aktuator relativ zu dem Bremshebel verschiebbar. Auf diese Weise ist durch den Aktuator lediglich das Verschieben der Verstellmechanik zu leisten. Da die Verstellmechanik nicht entgegen einer Kraft eines Benutzers zu bewegen ist, kann der Aktuator sehr einfach und kostengünstig ausgestaltet werden, da dieser lediglich geringe Kräfte auf die Verstellmechanik aufzubringen hat. Somit ist insbesondere auch eine Energieaufnahme des Aktuators minimiert, sodass eine effektive Regelung zum Vermeiden von Blockierzuständen von gebremsten Rädern ausführbar ist.

Der Aktuator ist bevorzugt zum Antreiben eines Spindeltriebs ausgebildet. Der Spindeltrieb ist mit besagter Verstellmechanik gekoppelt, um die Verstellmechanik linear zu verschieben. Insbesondere weist der Spindeltrieb eine Selbsthemmung auf, sodass keine externe Energie aufgebracht werden muss, um die Verstellmechanik in einer bestimmten Position zu halten. Vielmehr ist lediglich dann auf den Aktuator zurückzugreifen, wenn die Verstellmechanik tatsächlich bewegt werden soll. Somit ist erreicht, dass eine Energieaufnahme minimal ist.

Der Fluidzyliner ist vorteilhafterweise durch den Aktuator relativ zu dem Bremshebel verschiebbar, um eine Position des Kontaktpunktes zwischen Kolben und Bremshebel zu variieren. Auf dieselbe Weise wie die Änderung des Hebelabstandes aufgrund der Verschiebung des Lagers kann der Hebelabstand auch durch Verschieben des Kontaktpunktes variiert werden. Somit lassen sich dieselben Vorteile wie zuvor beschrieben erreichen.

Bevorzugt ist vorgesehen, dass der Aktuator ein Elektroantrieb ist. Insbesondere ist der Aktuator ein rotatorischer Elektromotor, durch den insbesondere ein Spindeltrieb antreibbar ist, wie zuvor beschrieben.

Die Erfindung betrifft außerdem ein Zweirad, insbesondere ein Fahrrad, das eine zuvor beschriebene Bremshebelvorrichtung umfasst. Das Zweirad umfasst außerdem eine Bremsleitung, die zum Verbinden von Bremshebelvorrichtungen und Bremsvorrichtungen dient, wobei mittels der Bremsvorrichtung ein Rad des Zweirads bremsbar ist. Somit umfasst die Bremsvorrichtung vorteilhafterweise einen Bremssattel und eine Bremsscheibe. Verwendet ein Benutzer die Bremshebelvorrichtung um die Bremsvorrichtung zu aktuieren, so ist ermöglicht, eine Regelung zum Vermeiden eines Blockierens und damit Stillstands des Rades auszuführen, wenn das Rad durch den Benutzer gebremst wird.

Die Erfindung betrifft außerdem ein Verfahren zum Ansteuern einer Bremshebelvorrichtung, wie zuvor beschrieben. Dabei ist vorgesehen, dass auf den Bremshebel eine Handkraft durch einen Benutzer aufgebracht. Das Verfahren umfasst ein Reduzieren eines Bremsdrucks in der Bremsleitung durch Erhöhen des Hebelabstandes zwischen Lager und Kontaktpunkt. Auf diese Weise kann, wie zuvor beschrieben, eine Bewegung des Bremshebels entgegen der Handkraft des Benutzers ausgeführt werden, um einerseits die Bremskraft der Bremsleitung zu verringern, andererseits die Energie innerhalb der Bremsleitung in eine Bewegung des Bremshebels zu wandeln. Somit geht besagte Energie nicht vollständig verloren und kann in einem weiteren Verlauf des Verfahrens wieder verwendet werden.

Besonders vorteilhaft erfolgt nach dem Reduzieren wiederum ein Erhöhen des Bremsdrucks durch ein Verringern des zuvor reduzierten Hebelabstandes. Somit ist insbesondere ein Regelzyklus erreicht, der durch wiederholtes Erhöhen und Reduzieren des Bremsdrucks einen gewünschten Bremsdruck in der Bremsleitung 3 modulieren kann.

Es ist weiterhin besonders vorteilhaft vorgesehen, dass zunächst ein Erkennen eines Stillstandes eines Rads, das durch die mit der Bremshebelvorrichtung verbundene Bremsvorrichtung bremsbar ist. Zusätzlich erfolgt ein wiederholtes Ausführen der Schritte des Reduzierens und Erhöhens des Bremsdruckes in der Bremsleitung im Ansprechen auf den erkannten Stillstand. Somit ist eine Regelung erreicht, die einen gewünschten oder vordefinierten Bremsdruck in der Bremsleitung und damit in der Bremsvorrichtung moduliert, wobei durch diesen Bremsdruck ein Stillstand des Rades vorteilhafterweise aufgelöst werden kann. Somit kann insbesondere zuverlässig verhindert werden, dass bei einer Vollbremsung des Zweirades eines der gebremsten Räder blockiert und damit stillsteht. Durch das wiederholte Ausführen der Schritte wird aufgrund von Verlusten das in der Bremsleitung und der Bremsvorrichtung vorhandene Bremsfluid allmählich reduziert. Allerdings ist eine solche Reduktion minimiert, da lediglich ein Ändern einer mechanischen Übersetzung an dem Bremshebel erfolgt. Somit lässt sich eine Vielzahl solcher Regelzyklen durchführen, um ein Blockieren und damit einen Stillstand des gebremsten Rades sicher und zuverlässig zu verhindern. Der Aktuator muss dabei nicht gegen die Handkraft des Benutzers arbeiten, wodurch ein sehr geringer Energiebedarf vorhanden ist.

Der Bremsdruck wird besonders vorteilhaft so weit reduziert, dass der Stillstand des Rads beendet ist. Insbesondere erfolgt dies durch Erhöhung des Hebelabstandes, was wiederum ein Verschieben des Bremshebels gegen die Handkraft des Benutzers bewirkt, wodurch ein Druck innerhalb der Bremsleitung und damit innerhalb der Bremsvorrichtung abgebaut wird. Dies führt zu einer verminderten Bremsleistung, wodurch ein blockiertes oder stillstehendes Rad wieder zum Rotieren angetrieben wird. Damit lässt sich das Blockieren oder der Stillstand des Rades effektiv vermeiden. Somit ist insbesondere eine Lenkfähigkeit des Zweirades auch während starken Bremsungen sichergestellt.

Kurze Beschreibung der Zeichnung

Nachfolgend werden Ausführungsbeispiele der Erfindung unter Bezugnahme auf die begleitende Zeichnung im Detail beschrieben. In der Zeichnung ist:

Figur 1     Ein Zweirad gemäß einem Ausführungsbeispiel der Erfindung

Figur 2     Eine schematische Ansicht einer Bremshebelvorrichtung gemäß einem ersten Ausführungsbeispiel der Erfindung, und

Figur 3     Eine schematische Ansicht einer Bremshebelvorrichtung gemäß einem zweiten Ausführungsbeispiel der Erfindung

Ausführungsformen der Erfindung

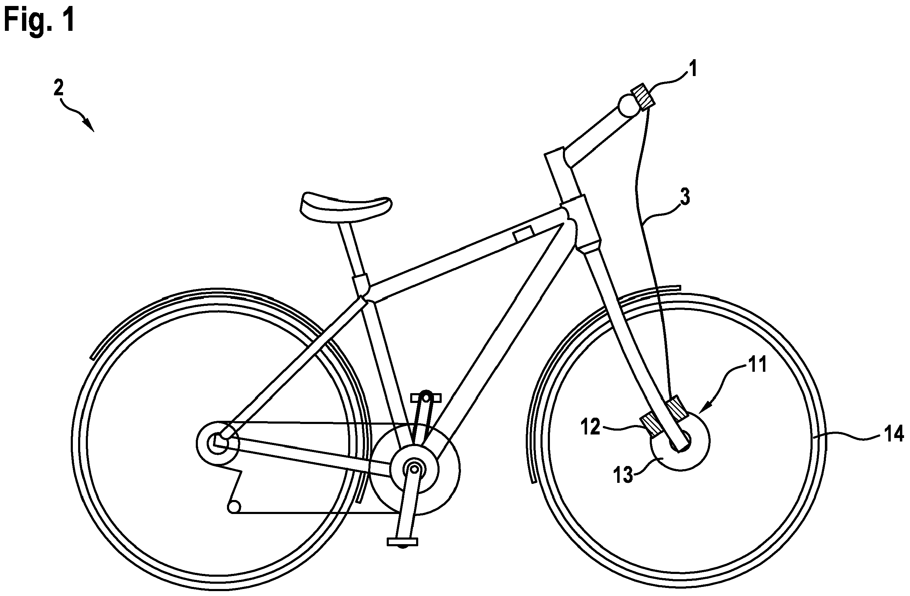

Figur 1 zeigt schematisch ein Zweirad 2, insbesondere ein Fahrrad, gemäß einem Ausführungsbeispiel der Erfindung, das Zweirad 2 umfasst eine Bremshebelvorrichtung 1 gemäß einem Ausführungsbeispiel der Erfindung. Über eine Bremsleitung 3 ist die Bremshebelvorrichtung mit einer Bremsvorrichtung 11 verbunden, wobei die Bremsvorrichtung 11 einen Bremssattel 12 und eine Bremsscheibe 13 umfasst. Somit ist ein Rad 14 des Zweirads 2 durch die Bremshebelvorrichtung 1 bremsbar. Wird über die Bremshebelvorrichtung 1 eine Bremskraft in der Bremsleitung 3 erzeugt, die zu einem Blockieren des Rades 14 führt, so besteht eine Gefahr für einen Benutzer des Zweirads 2. Zum einen besteht die Gefahr eines Überschlags, zum anderen besteht die Gefahr, dass das Zweirad 2 aufgrund des blockierenden Rads 14 nicht mehr kontrollierbar ist. Daher ist vorteilhaft, das Blockieren des Rades 14 zu vermeiden.

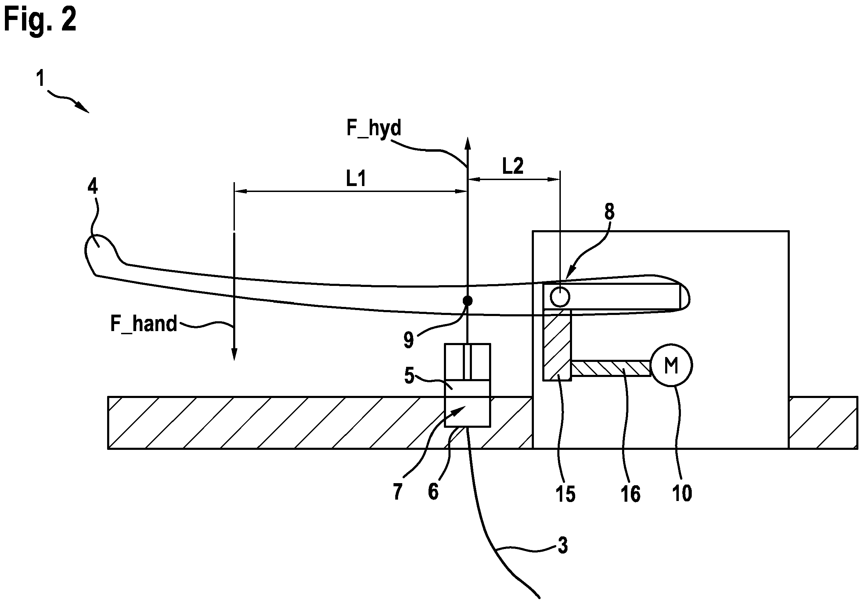

Figur 2 zeigt schematisch ein erstes Ausführungsbeispiel der Bremshebelvorrichtung 1. Die Bremshebelvorrichtung umfasst einen Bremshebel 4 sowie einen Fluidzylinder 6. Ein Kolben 5 des Fluidzylinders 6 ist mit dem Bremshebel 4 an einem Kontaktpunkt 9 gekoppelt. Der Bremshebel 4 wiederum ist an einem Lager 8 drehbar gelagert, wobei das Lager 8 einen Drehpunkt definiert, um den der Bremshebel 4 drehbar ist.

Wird der Bremshebel 4 von einem Benutzer aktuiert, so bringt der Benutzer eine Handkraft F_hand auf den Bremshebel 4 auf. Dabei kann anhand einer Griffposition des Benutzers an dem Bremshebel 4 ein Fixabstand L1 zwischen Angriffspunkt der Handkraft F_hand und dem Kontaktpunkt 9 ermittelt werden. Übt der Benutzer besagte Handkraft F_hand auf den Bremshebel 4 aus, so wird der Kolben 5 aufgrund der Kopplung über den Fixpunkt 9 bewegt, wodurch Druck einer Druckkammer 7 des Fluidzylinders 6 aufgebaut wird. Dieser Druck wird unmittelbar an die Bremsleitung 3 übertragen. Auf diese Weise lässt sich ein Bremsdruck in der Bremsleitung 3 herstellen, der zu einem Bremsen des Rades 14 aufgrund des Zusammenspiels von Bremssattel 12 und Bremsscheibe 13 führt. Bringt der Benutzer eine zu große Handkraft F_hand auf, so besteht die Gefahr eines Blockierens des Rades. Dies ist durch die Bremshebelvorrichtung 1 jedoch verhinderbar, da eine mechanische Übersetzung der Bremshebelvorrichtung 1 geändert werden kann.

So ist vorgesehen, dass das Lager 8 an einer Verstellmechanik 15 angebracht ist. Die Verstellmechanik 15 ist über einen Spindeltrieb 16 mit einem Aktuator 10, insbesondere einem Elektromotor, gekoppelt. Somit kann die Verstellmechanik 15 durch den Aktuator 10 und den Spindeltrieb 16 relativ zu dem Bremshebel 4 verschoben werden. Auf diese Weise ist ein Hebelabstand L2 zwischen Lager 8 und Kontaktpunkt 9 variierbar.

Erfolgt eine Bremsung durch den Benutzer, so läuft dies üblicherweise folgendermaßen ab: Der Benutzer betätigt den Bremshebel 4 und bringt somit die Handkraft F_hand auf. Der Bremshebel 4 bewegt sich dadurch in einer Rotationsbewegung um das Lager 8, wobei gleichzeitig der Kolben 6 bewegt wird. Wenn Bremsbeläge des Bremssattels 12 an der Bremsscheibe 13 anliegen, so wird in der Bremsleitung 3 ein Bremsdruck P generiert. Durch diesen Druck entsteht an dem Kolben 5 eine hydraulische Kraft F_hyd, die auf den Bremshebel 4 an dem Kontaktpunkt 9 wirkt und der Handkraft F_hand entgegengesetzt ist. Diese hydraulische Kraft F_hyd hängt mit dem Bremsdruck P und der Kolbenfläche des Kolbens 5 durch folgende Formel zusammen:

$$F\_hyd = P \times A$$

Durch die unterschiedlichen Abstände zwischen dem Lager 8 und dem Kontaktpunkt 9 sowie dem Lager 8 und dem Angriffspunkt der Handkraft F_hand ergibt sich jeweils ein unterschiedlicher Hebelarm an dem Bremshebel 4. An dem Bremshebel 4 wirkt somit ein Hydraulik-Moment M_hyd sowie ein Handmoment M_hand. Diese berechnen sich wie folgt:

$$M\_hand = F\_hand \times (L1 + L2)$$

$$M\_hyd = F\_hyd \times L2$$

Sind beide Momente identisch, so befindet sich der Bremshebel 4 in einem Gleichgewicht, indem sich dieser nicht bewegt. Somit stellt sich ein Gleichgewicht ein, wenn die folgende Formel erfüllt ist:

$$F\text{-}hand \times (L1 + L2) = F\_hyd \times L2$$

Dies lässt sich umformen zu:

$$F\_hyd = F\_hand \times (L1 + L2) : L2$$

Daraus ist ersichtlich, dass die Längen L1 und L2, das heißt, der Hebelabstand L2 und der Fixabstand L1, eine mechanische Übersetzung Ü bilden, wobei die Übersetzung Ü bei herkömmlichen Fahrradbremsen den Wert 7 annimmt. Dies bedeutet, dass die hydraulische Kraft F_hyd in einem Gleichgewichtszustand siebenmal größer ist als die aufgebrachte Handkraft F_hand.

Soll aus diesem Gleichgewichtszustand ein Bremsdruck P abgebaut werden, so wird die Übersetzung Ü verändert. Insbesondere wird erkannt, dass das Rad 14 blockiert und der Bremsdruck P zu reduzieren ist, um die Blockade aufzuheben. Insbesondere wird das Lager durch den Aktuator 10, den Spindeltrieb 16 und die Verstellmechanik 15 in Figur 2 nach rechts verschoben, wodurch sich der Hebelabstand L2 vergrößert. Der Fixabstand L1 bleibt dabei konstant. Somit wird die Übersetzung Ü geringer. Anhand der obigen Formel, die den Zusammenhang zwischen der Handkraft F_hand und der hydraulischen Kraft F_hyd darstellt, ist ersichtlich, dass bei einer geringeren Übersetzung Ü auch eine geringere Hydraulikkraft für das Gleichgewicht notwendig ist. Daher ist nach der Veränderung des Hebelabstandes L2 die vorherrschende Hydraulikkraft F-hyd zu groß für das Gleichgewicht, wodurch der Bremshebel 4 gegen die Handkraft F_hand bewegt wird, bis die Hydraulikkraft aufgrund des Bewegens des Kolbens 5 abgesunken ist, um obiges Gleichgewicht wieder zu erfüllen. Da die Hydraulikkraft F_hyd durch Multiplikation des Bremsdrucks P und der Kolbenfläche A des Kolbens 5 bestimmt werden kann, lässt sich insbesondere ein Zusammenhang zwischen dem Bremsdruck P und der Übersetzung Ü darstellen:

$$P=F\_hand x Ü : A$$

Es ist somit ersichtlich, dass bei konstanter Handkraft F_hand und konstanter Kolbenfläche des Kolbens 5 durch Änderung der Übersetzung Ü die Bremskraft P verändert werden kann. Somit kann der Bremsdruck P durch Modulieren der Übersetzung moduliert werden. Dadurch lässt sich ein Verfahren umsetzen, bei dem solange die Übersetzung verringert wird, bis kein Blockieren des Rades 14 mehr vorhanden ist, wobei anschließend eine Erhöhung der Übersetzung Ü erfolgen kann. Somit lassen sich Regelzyklen finden, um einerseits eine optimale Bremskraft auf das Rad 14 auszuüben, andererseits um ein Blockieren des rades 14 zu verhindern.

Der Aktuator 10 muss dabei nicht selbst gegen die Handkraft F_hand wirken. Der Aktuator 10 kann somit sehr energiesparend betrieben werden. Die benötigte Energie zum Abbau des Bremsdrucks P wird nahezu vollständig aus der Bremsleitung 3 entnommen. Somit ist ein sehr effizientes System erreicht.

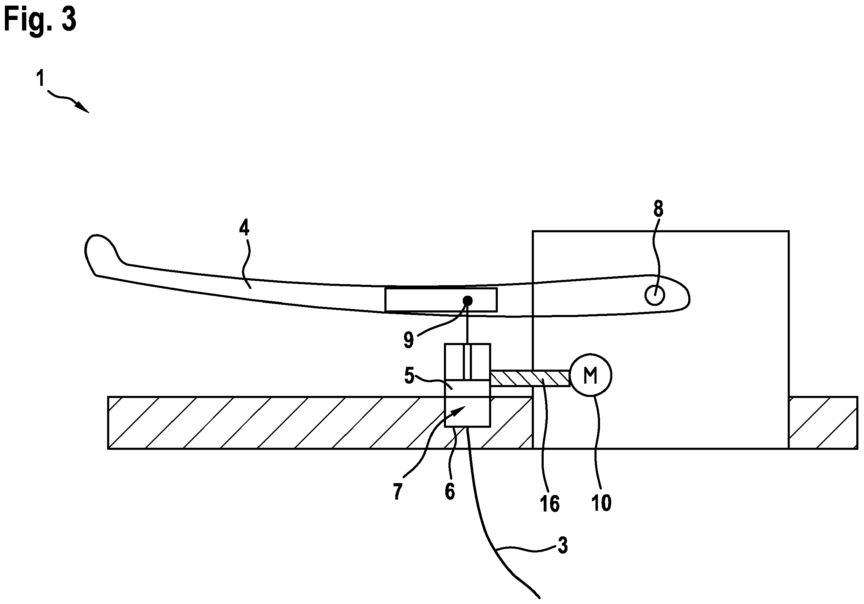

Figur 3 zeigt schematisch ein zweites Ausführungsbeispiel der Bremshebelvorrichtung 1. Der Unterschied zu dem ersten Ausführungsbeispiel ist darin zu sehen, dass das Lager 8 fest steht, wobei der Kontaktpunkt 9 bezüglich dem Bremshebel 4 verschiebbar ist. Insbesondere ist der Fluidzylinder 6 mit dem Aktuator 10 und dem Spindeltrieb 16 gekoppelt, um den Fluidzylinder 6 und damit auch den Kolben 5 relativ zu dem Bremshebel 4 zu verschieben. Damit ändert sich auch die Position des Kontaktpunkts 9, wodurch derselbe Effekt erreicht ist wie durch das Verschieben des Lagers 8. Somit kann auch durch das zweite Ausführungsbeispiel der Bremshebelvorrichtung 1 sicher und zuverlässig ein Vermeiden eines Blockierens des gebremsten Rades sichergestellt werden.

**Patentansprüche**

1. Bremshebelvorrichtung (1) eines Zweirads (2), aufweisend einen Bremshebel (4), der an einem Lager (8) drehbar gelagert und an einem Kontaktpunkt (9) mit einem Kolben (5) eines Fluidzylinders (6) gekoppelt ist, wobei eine Druckkammer (7) des Fluidzylinders (6) direkt mit einer Bremsleitung (3) verbunden ist, und wobei ein Hebelabstand (L2) zwischen Lager (8) und Kontaktpunkt (9) durch einen Aktuator (10) veränderlich ist.

2. Bremshebelvorrichtung (1) nach Anspruch 1, **dadurch gekennzeichnet, dass** das Lager (8) an einer Verstellmechanik (15) angebracht ist, wobei die Verstellmechanik (15) durch den Aktuator (10) relativ zu dem Bremshebel (4) verschiebbar ist.

3. Bremshebelvorrichtung (1) nach Anspruch 2, **dadurch gekennzeichnet, dass** der Aktuator (10) zum Antreiben eines Spindeltriebs (16) ausgebildet ist, wobei der Spindeltrieb (16) mit der Verstellmechanik (15) gekoppelt ist, um die Verstellmechanik (15) linear zu verschieben.

4. Bremshebelvorrichtung (1) nach einem der vorhergehenden Ansprüche, **dadurch gekennzeichnet, dass** der Fluidzylinder (6) durch den Aktuator (10) relativ zu dem Bremshebel (4) verschiebbar ist, um eine Position des Kontaktpunkts (9) zwischen Kolben (5) und Bremshebel (4) zu variieren.

5. Bremshebelvorrichtung (1) nach einem der vorhergehenden Ansprüche, **dadurch gekennzeichnet, dass** der Aktuator (10) ein Elektroantrieb ist.

6. Zweirad (2), insbesondere Fahrrad, umfassend eine Bremshebelvorrichtung (1) nach einem der vorhergehenden Ansprüche sowie eine über die Bremsleitung (3) mit der Bremshebelvorrichtung (1) gekoppelte Bremsvorrichtung (11), insbesondere einen Bremssattel (12) und eine Bremsscheibe (13), die zum Bremsen eines Rads (14) des Zweirads (2) ausgebildet ist.

7. Verfahren zum Ansteuern einer Bremshebelvorrichtung (1) nach einem der Ansprüche 1 bis 5, wobei auf den Bremshebel (4) eine Handkraft (F_hand) durch einen Benutzer aufgebracht ist, umfassend ein Reduzieren eines Bremsdrucks in der Bremsleitung (3) durch Erhöhen des Hebelabstands (L2).

8. Verfahren nach Anspruch 7, **gekennzeichnet durch** ein Erhöhen des Bremsdrucks durch ein Verringern des zuvor erhöhten Hebelabstands (L2).

9. Verfahren nach Anspruch 8, **gekennzeichnet durch** ein Erkennen eines Stillstands eines Rads (14), das durch die mit der Bremshebelvorrichtung (1) verbundene Bremsvorrichtung (11) bremsbar ist, und ein wiederholtes Ausführen der Schritte des Reduzierens und Erhöhen des Bremsdrucks in der Bremsleitung (3) im Ansprechen auf den erkannten Stillstand.

10. Verfahren nach einem der Ansprüche 7 bis 9, **dadurch gekennzeichnet, dass** der Bremsdruck durch Erhöhen des Hebelabstands (L2) so weit reduziert wird, bis der Stillstand des Rads (14) beendet ist.

**Fig. 1**

EP 3 632 756 A1

Fig. 2

# Fig. 3

EP 3 632 756 A1

Europäisches
Patentamt

European
Patent Office

Office européen
des brevets

# EUROPÄISCHER RECHERCHENBERICHT

**Nummer der Anmeldung**

EP 19 19 7328

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/131441 A1 (FRENI BREMBO SPA [IT]; CARONIA MARCO [IT]; GHERARDI PIERANGELO [IT]) 4. Oktober 2012 (2012-10-04) * Absätze [0072], [0084], [0085]; Anspruch 3; Abbildungen 1,3,23,24 * ----- | 1-10 | INV. B60T8/17 B60T8/32 B62L3/02 |
| X | US 5 050 381 A (MATSUNO ISAO [JP] ET AL) 24. September 1991 (1991-09-24) * Spalte 5, Zeile 33 - Zeile 58; Abbildung 6 * ----- | 1-10 | |
| A,D | WO 2014/166336 A1 (BOSCH AUTOMOTIVE PROD SUZHOU [CN]) 16. Oktober 2014 (2014-10-16) * Zusammenfassung; Abbildung 1 * ----- | 1-10 | RECHERCHIERTE SACHGEBIETE (IPC) B60T B62M B62L |

Der vorliegende Recherchenbericht wurde für alle Patentansprüche erstellt

| Recherchenort | Abschlußdatum der Recherche | Prüfer |
|---|---|---|
| München | 20. Februar 2020 | Schroeder, Rainer |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
    Dokument

**ANHANG ZUM EUROPÄISCHEN RECHERCHENBERICHT
ÜBER DIE EUROPÄISCHE PATENTANMELDUNG NR.**

EP 19 19 7328

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2020

| Im Recherchenbericht angeführtes Patentdokument | Datum der Veröffentlichung | Mitglied(er) der Patentfamilie | Datum der Veröffentlichung |
|---|---|---|---|
| WO 2012131441 A1 | 04-10-2012 | CN 103596833 A | 19-02-2014 |
| | | EP 2694359 A1 | 12-02-2014 |
| | | JP 5883115 B2 | 09-03-2016 |
| | | JP 2014514204 A | 19-06-2014 |
| | | WO 2012131441 A1 | 04-10-2012 |
| US 5050381 A | 24-09-1991 | JP H041034 Y2 | 14-01-1992 |
| | | JP H0382691 U | 22-08-1991 |
| | | US 5050381 A | 24-09-1991 |
| WO 2014166336 A1 | 16-10-2014 | CN 104097731 A | 15-10-2014 |
| | | WO 2014166336 A1 | 16-10-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4131864 A1
- FR 2738207 A1
- FR 2738204 A1
- WO 2014166336 A1
- US 4315659 A
- US 4456310 A
- US 4494800 A